# NOUVEAU FASCICULE DE BREVET EUROPEEN

(11) **EP 0 740 400 B2**
(45) Date de publication et mention de la décision concernant l'opposition: **23.05.2007**
(45) Mention de la délivrance du brevet: 16.06.1999
(21) Numéro de dépôt: 96400894.0
(22) Date de dépôt: 25.04.1996
(51) Int. Cl.: H02K 5/20, H02K 9/06

(54) **Alternateur pour véhicule automobile muni de moyens de cloisonnement externes pour éviter un bouclage du circuit d'air de refroidissement**
Drehstromgenerator für Kraftfahrzeugen mit Kuhlluftrückführung verhinderenden Trennwand
Car alternator with external baffle to prevent recirculation of the cooling air

(30) Priorité: 26.04.1995 FR 9505105
(43) Date de publication de la demande: 30.10.1996
(73) Titulaire: VALEO EQUIPEMENTS ELECTRIQUES MOTEUR, 94017 Creteil (FR)
(72) Inventeur: Morel, Daniel, 94000 Créteil (FR)
(74) Mandataire: Gamonal, Didier

(56) Documents cités:
- EP-A- 0 300 063
- FR-A- 2 703 852
- Bosch, "Teile fuer Starter und Generatoren", Ausgabe 1995/96 , erschienen im Dezember 1994
- "Internationales Automobil-Handbuch", herausgegeben von Kramer, J., Europaverlag Stuttgart, 1954
- "Taschenbuch fuer den Kraftfahrzeugingenieur" von Buschmann, H. und Koessler, P., Deutsche Verlagsanstalt, 7. Auflage, 1963
- "Automobiltechnisches Handbuch", herausgegeben von Goldbeck, G., Technischer Verlag Herbert Cram, Berlin 1965
- "Schnelle Motoren-Seziert und Frisiert", Huetten, H., Verlag Richard Carl Schmidt & Co., Braunschweig, 1963
- Bosch, "Kompaktgeneratoren", Ausgabe 1989

## Description

L'invention concerne un alternateur pour véhicule automobile.

L'invention concerne plus particulièrement un alternateur, du type comportant un ventilateur qui provoque une circulation interne d'air de refroidissement à l'intérieur de l'alternateur entre une entrée d'aspiration où est aspiré de l'air frais et une sortie de refoulement où est refoulé de l'air réchauffé au contact des éléments actifs de l'alternateur.

Les documents EP-A-0300063 et Bosch "Compact-Generatoren" l'édition de 1989), conformes au préambule de la revendication 1, décrivent un tel alternateur selon l'art antérieur.

Les alternateurs de véhicule automobile sont obligés de fournir des courants de plus en plus importants du fait de la multiplication des équipements électriques qui équipent les véhicules modernes.

De ce fait, un refroidissement efficace de l'alternateur est devenu un problème important pour en garantir un bon niveau de performances et de fiabilité.

En effet, l'accroissement du courant fourni par les alternateurs entraîne une hausse proportionnelle de la quantité de chaleur produite au niveau des fils de bobinage ou des circuits électroniques de régulation du courant, mais également au niveau des éléments mécaniques tels que les paliers ou les roulements.

De plus, dans un souci de réduction de l'encombrement des groupes motopropulseurs, les constructeurs tendent à concevoir des ensembles les plus compacts possible au sein desquels la circulation des flux d'air de refroidissement est difficile, et au sein desquels les éléments annexes du moteur tel que l'alternateur se retrouve très près du bloc du moteur dont on sait qu'il atteint de hautes températures en cours de fonctionnement.

On s'est ainsi aperçu que, dans certains cas, l'implantation de l'alternateur dans l'environnement moteur est telle qu'il se produit un bouclage du circuit d'air de refroidissement entraîné par le ventilateur de l'alternateur, à l'extérieur de l'alternateur.

Ainsi, l'air de refroidissement qui est refoulé de l'alternateur rencontre une paroi, par exemple du bloc moteur, qui le dévie et le dirige notamment en direction de l'entrée du flux de refroidissement de l'alternateur.

Dans ce cas, le refroidissement de l'alternateur s'effectue en boucle fermée ce qui nuit beaucoup à son efficacité et peut entraîner de graves problèmes de fonctionnement, notamment des composants électroniques de régulation du courant produit par l'alternateur qui sont soumis à une température excessive.

Le document FR-A-2703852 décrit un alternateur pour véhicule automobile comportant une conduite d'amenée d'air de refroidissement. Une telle conduite est cependant coûteuse à concevoir et à fabriquer.

Ce problème est résolu par la partie caractérisante de la revendication 1.

Selon une autre caractéristique de l'invention :
- la collerette s'étend radialement vers l'extérieur depuis un capot de protection de l'alternateur qui est réalisé par moulage en matière plastique.

D'autres avantages de l'invention apparaîtront à la lecture de la description détaillée qui suit pour la compréhension de laquelle on se reportera aux dessins annexés dans lesquels :
- La figure 1 est une vue schématique en coupe axiale partielle d'un alternateur sur lequel on a représenté le circuit théorique du flux d'air de refroidissement ;
- la figure 2 est une vue similaire à celle de la figure 1 dans laquelle on a représenté le flux d'air perturbé par l'environnement de l'alternateur ;
- la figure 3 est une vue similaire à celle de la figure 2 représentant un alternateur conforme aux enseignements de l'invention ;

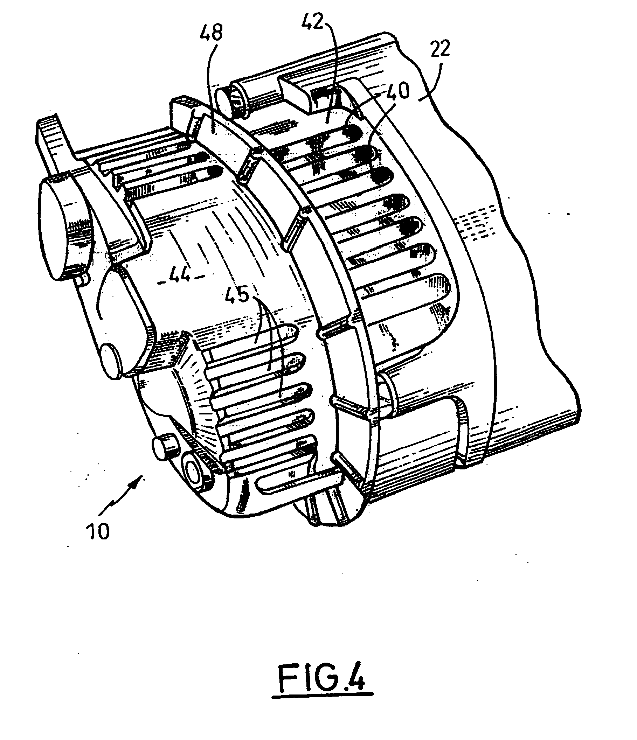

- la figure 4 est une vue partielle en perspective d'un alternateur conforme aux enseignements de l'invention.

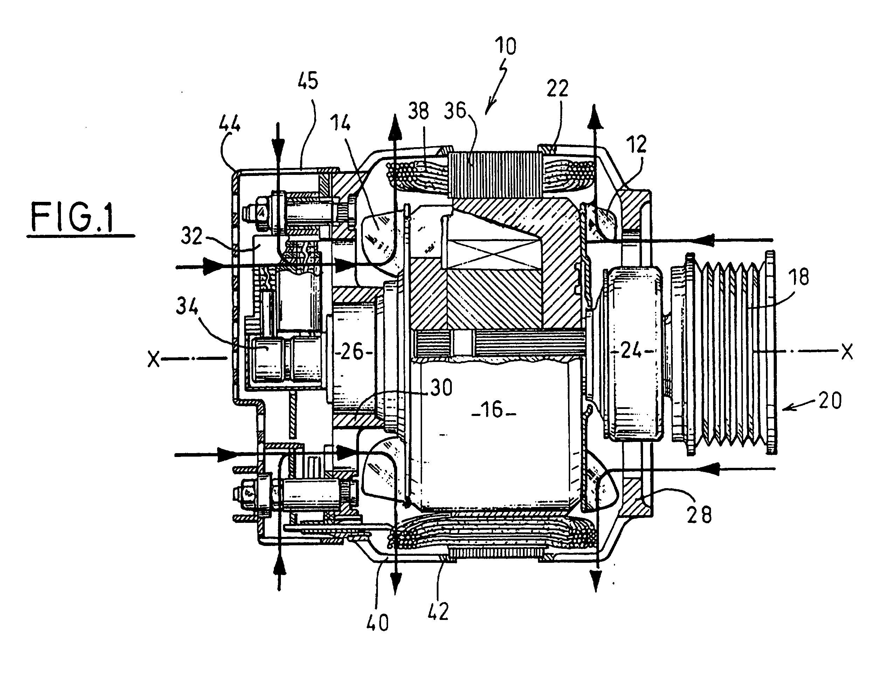

On a représenté sur la figure 1 un alternateur 10 muni de deux ventilateurs internes 12, 14 qui en assurent le refroidissement.

Les ventilateurs 12, 14 sont solidaires du rotor 16 de l'alternateur 10 qui est entraîné en rotation autour de son axe X-X par une courroie (non représentée) qui est reçue sur une poulie d'entraînement 18 agencée à une extrémité axiale 20 de l'alternateur 10.

Le rotor 16 est monté tournant à l'intérieur du carter sensiblement cylindrique 22 de l'alternateur 10 par des roulements 24, 26 montés dans des paliers 28, 30 qui ferment l'alternateur à chacune de ses extrémités axiales.

Sur le palier arrière 30, opposé à l'extrémité axiale 20 à laquelle est agencée la roue d'entraînement 18, est disposée une plaque porte-balais 32.

La plaque porte-balais 32 porte, outre les balais 34, des moyens (non représentés) de connexion et de pilotage du courant produit par l'alternateur 10.

On y trouve notamment un pont redresseur, un régulateur de tension, un condensateur et des bornes de raccordement au circuit électrique du véhicule.

On trouve également dans l'alternateur 10 des masses polaires statoriques 36 munies de leurs bobinages inducteurs 38.

Les ventilateurs 12, 14 étant disposés à l'intérieur de l'alternateur 10, ils aspirent de l'air frais au travers des paliers 28, 30, qui délimitent des entrées d'aspiration d'air frais de refroidissement, et refoulent l'air réchauffé au contact des éléments actifs de l'alternateur par des ouïes 40 percées dans la paroi latérale cylindrique 42 du carter 22 de l'alternateur 10 qui constituent des sorties de refoulement de l'air réchauffé.

La zone de l'alternateur qui est la plus sensible à l'élévation de température est la plaque porte-balais 32 qui porte les composants électroniques de régulation du courant.

Cette plaque porte-balais 32, qui est protégée par un capot 44 percé de multiples orifices 45, est refroidie par le courant d'air fourni par le ventilateur 14 qui possède le débit d'air le plus important.

Ce fort débit d'air est ainsi aspiré au travers des orifices 45 du capot 44 et il est refoulé radialement au travers des ouïes 40 du carter 22 de l'alternateur 10.

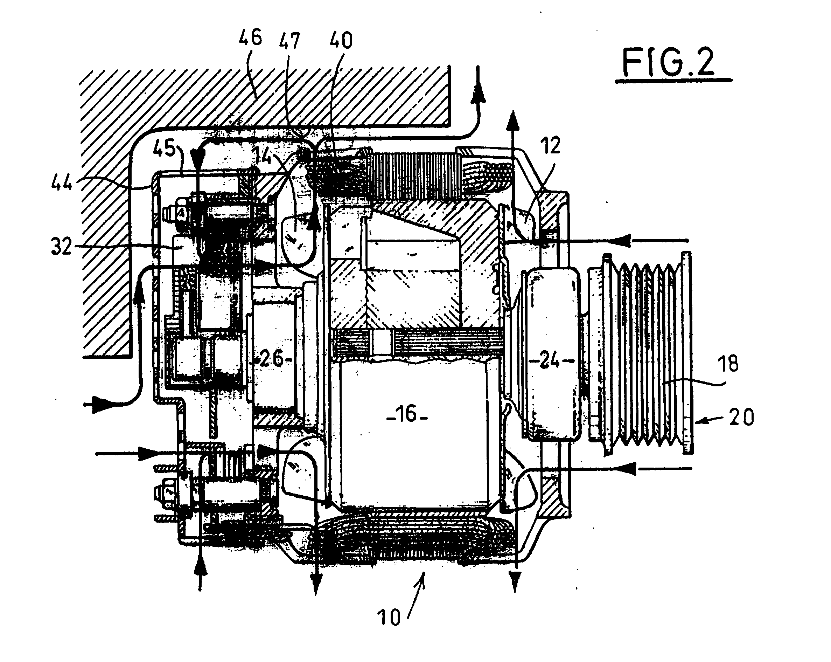

On a représenté sur la figure 2 un tel alternateur 10 une fois intégré au groupe motopropulseur du véhicule.

Le groupe motopropulseur est ici représenté schématiquement par son encombrement 46 dont on voit qu'il perturbe le flux de refroidissement de la plaque porte-balais 32.

En effet, l'air qui est refoulé radialement par le ventilateur 14 à travers les ouïes 40 rencontre une paroi 47 qui le dévie partiellement selon la direction axiale et qui provoque un bouclage de l'air de refroidissement de la plaque porte-balais 32 à l'extrémité de l'alternateur.

Si l'alternateur 10 est monté directement contre le bloc du moteur qui est à haute température, cet air sera de plus réchauffé au contact de la paroi 47 avant de recirculer autour de la plaque porte-balais 32.

Il s'ensuit que la température de fonctionnement de la plaque porte-balais 32 augmente de manière très importante jusqu'à devenir critique pour le fonctionnement des composants électroniques qu'elle supporte.

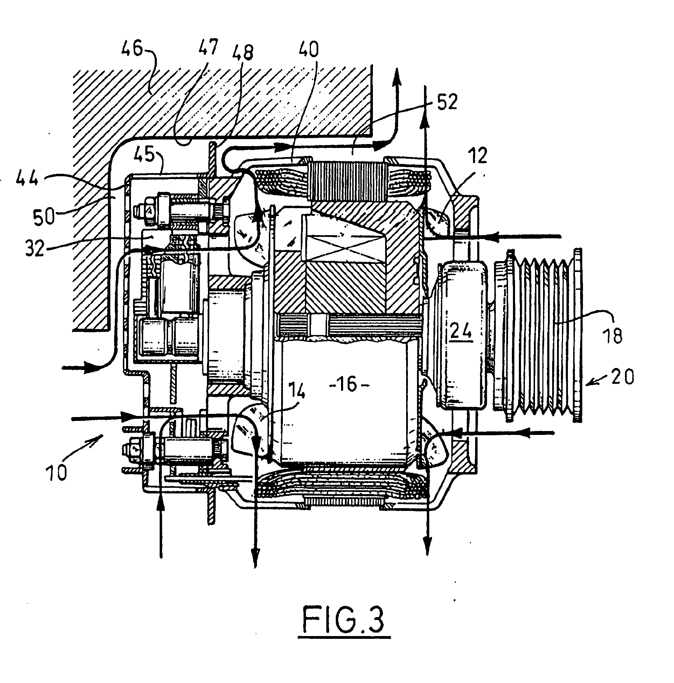

On a représenté sur la figure 3 un alternateur conforme aux enseignements de l'invention.

Sur cet alternateur 10, le capot 44 de protection de la plaque porte-balais 32 est muni d'un collet radial externe 48 qui est agencé au niveau du palier arrière 30 de l'alternateur, entre les ouïes 40 de refoulement de l'air chaud et les orifices 45 du capot 44 par lesquelles s'effectue alimentation en air frais.

Le collet radial 48 est dimensionné de telle sorte qu'il coopère avec l'encombrement du groupe motopropulseur 46 afin de délimiter deux passages relativement étanches réservés l'un 50 à l'admission d'air frais et l'autre 52 au refoulement de l'air réchauffé.

Le capot de protection 44 étant généralement réalisé par moulage en matière plastique il est aisé d'obtenir une forme pour le collet radial 48 qui s'adapte exactement à l'encombrement du groupe motopropulseur 46 et qui permet ainsi d'éviter tout bouclage du circuit d'air de refroidissement de l'alternateur 10, le collet 48 étant réalisé venu de matière par moulage.

On pourra toutefois, sans sortir du cadre de l'invention, prévoir de réaliser le collet radial de cloisonnement venu de matière avec le palier arrière 30 ou avec le carter 22 de l'alternateur 10 ou bien encore prévoir de le réaliser sous la forme d'une pièce rapportée.

## Revendications

1. Alternateur intégré au groupe motopropulseur d'un véhicule automobile, du type comprenant un ventilateur (14) qui provoque une circulation interne d'air de refroidissement de l'alternateur (10) entre une entrée (45) où est aspiré de l'air frais et une sortie (40) où est refoulé l'air qui a été réchauffé au contact des éléments actifs de l'alternateur (10) protégés par un capot de protection (44) doté d'une paroi latérale et d'un fond, dans lequel le ventilateur (14) est solidaire d'un rotor (16) monté tournant à l'intérieur d'un carter (22) doté d'une paroi latérale (42) présentant des ouïes (40) constituant la sortie d'air, tandis que l'entrée d'air est constituée par de multiples orifices (45) du capot (44), l'air étant aspiré au travers des orifices (45) du capot (44) pour être refoulé radialement au travers des ouïes (40) du carter (22), **caractérisé en ce qu'**il est prévu sur l'alternateur des moyens dé cloisonnement (48) qui sont agencés à l'extérieur de l'alternateur (10), entre l'entrée et la sortie d'air, et qui coopèrent avec des parois adjacentes (47) à l'alternateur appartenant au groupe motopropulseur, et **en ce que** les moyens de cloisonnement comportent une collerette (48) agencée sur l'alternateur (10) et qui épouse à la forme des parois (47) adjacentes à l'alternateur pour délimiter des passages d'alimentation d'air frais(50) et de refoulement (52) d'air réchauffé à l'extérieur de l'alternateur et pour éviter un bouclage du circuit d'air de refroidissement de l'alternateur à l'extérieur de ce dernier.

2. Alternateur selon revendication 1, **caractérisé en ce que** la collerette (48) s'étend radialement vers l'extérieur depuis le capot de protection de l'alternateur qui est réalisé par moulage en matière plastique.

## Claims

1. Alternator (1) for a motor vehicle, of the type comprising a fan (12, 14) that causes an internal circulation of air for cooling the alternator (10) between an inlet (45) where fresh air is sucked in and an outlet (40) where the air is discharged that has been heated in contact with the active elements of the alternator (10) protected by a protective cover (44) provided with a lateral wall and a bottom, in which the fan (14) is fixed to a rotor (16) mounted so as to rotate inside a casing (22) provided with a lateral wall (42) having apertures (40) constituting the air outlet, while the inlet consists of many orifices (45) in the cover (44), the air being sucked through orifices (45) in the cover (44) so as to be discharged radially through the apertures (40) in the casing (22), **characterised in that** partitioning means (48) are provided on the alternator, which are arranged outside the alternator (10) between the air inlet and outlet, and which cooperate with walls (47) adjacent to the alternator belonging to the motive power unit, and **in that** the partitioning means comprise a collar (48) arranged on the alternator (10) and which follow the shape of the walls (47) adjacent to the alternator in order to delimit passages for supplying fresh air (50) and discharging (52) heated air outside the alternator and to prevent looping back of the cooling air circuit for the alternator outside the latter.

2. Alternator according to claim 1, **characterised in that** the collar (48) extends radially towards the outside from the protective cover of the alternator, which is produced by moulding plastics material.

## Patentansprüche

1. In das Antriebsaggregat eines Kraftfahrzeugs integrierter Drehstromgenerator in der Ausführung mit einem Lüfter (14), der eine innere Zirkulation von Kühlluft zur Kühlung des Drehstromgenerators (10) zwischen einem Einlass (45), an dem Frischluft angesaugt wird, und einem Auslass (40) bewirkt, an dem die Luft ausgelassen wird, die in Kontakt mit den aktiven Elementen des Drehstromgenerators (10) erwärmt worden ist, die durch eine mit einer Seitenwand und einem Boden versehene Schutzkappe (44) geschützt sind, wobei der Lüfter (14) fest mit einem Läufer (16) verbunden ist, der drehend im Innern eines Gehäuses (22) gelagert ist, das mit einer Seitenwand (42) versehen ist, die Schlitze (40) aufweist, welche den Luftauslass bilden, während der Lufteinlass aus mehreren Öffnungen (45) der Kappe (44) besteht, wobei die Luft durch die Öffnungen (45) der Kappe (44) angesaugt wird, um durch die Schlitze (40) des Gehäuses (22) radial ausgelassen zu werden, **dadurch gekennzeichnet, dass** am Drehstromgenerator Abtrennmittel (48) vorgesehen sind, die außen am Drehstromgenerator (10) zwischen dem Lufteinlass und dem Luftauslass angeordnet sind und die mit dem Drehstromgenerator zugekehrten Wänden (47) zusammenwirken, die zum Antriebsaggregat gehören, und **dass** die Abtrennmittel einen Kragen (48) umfassen, der am Drehstromgenerator (10) angeordnet ist und der sich an die Form der dem Drehstromgenerator zugekehrten Wände (47) angepasst, um Durchlässe für die Frischluftzuleitung (50) und die Warmluftableitung (52) außerhalb des Drehstromgenerators zu begrenzen und eine Rückführung des Kühlluftkreislaufs des Drehstromgenerators außerhalb dieses Generators verhindern.

2. Drehstromgenerator nach Anspruch 1, **dadurch gekennzeichnet, dass** sich der Kragen (48) von der Schutzkappe des Drehstromgenerators aus, die als Formteil aus Kunststoff ausgeführt ist, radial nach außen erstreckt.
